# EUROPEAN PATENT APPLICATION

(11) **EP 1 365 306 A2**
(43) Date of publication of application: **26.11.2003**
(21) Application number: 03005061.1
(22) Date of filing: 06.03.2003
(51) Int. Cl.: G06F 1/00

(54) **Data protection system**

(30) Priority: 23.05.2002 JP 2002149314
(71) Applicant: Hitachi, Ltd., Chiyoda-ku, Tokyo 101-8010 (JP)
(72) Inventor: Itoh, Shinji, Chiyoda-ku, Tokyo 100-8220 (JP); Miyazaki, Kunihiko, Chiyoda-ku, Tokyo 100-8220 (JP); Yoshiura, Hiroshi, Chiyoda-ku, Tokyo 100-8220 (JP); Omoto, Narihiro, Chiyoda-ku, Tokyo 100-8220 (JP)
(74) Representative: Strehl Schübel-Hopf & Partner

(57) **Abstract**

Data protection techniques for preventing deletion, alteration, and leakage of data due to carelessness of a user and other programs (including a computer virus) and for preventing alteration of a program that uses the data are provided using a multi-OS control program, a host OS directly used by the user and a guest OS for managing files to be protected are run. A communication control program (110) determines whether access from a signature request program (107) can be performed or not, based on an access control list (119). In the case of access being authorized, a signature generation program (108) is executed. The signature generation program (108) generates a signature using a private-key (117). The communication control program (110) sends back the generated signature to a requesting source through an inter-OS communication program (111).

## Description

This application claims priority based on a Japanese patent application, No. 2002-149314 filed on May 23, 2002, the entire contents of which are incorporated herein by reference.

### BACKGROUND OF THE INVENTION

The present invention relates to a data protection system for preventing malicious alteration, deletion, and leakage of important files stored in an information processing system, thereby ensuring high security.

In information processing systems that uses an electronic computer, it has been common practice to use an Operating System (OS) that provides a basic scheme for executing a lot of application programs in order to effect efficient utilization of hardware resources.

Protection of files in the information processing system is mainly realized by using a file access control function, which is one of functions of the OS.

Generally, control over access to a file is executed based on determination whether a user is authorized to access the file or not. The user can access the file he is authorized to do, using an arbitrary application.

On the other hand, in order to protect secret information, an encryption technique is sometimes employed. By performing decoding only when the secret information is used, leakage of the secret information can be prevented, even if a file that records the secret information has been obtained by a third party without proper authorization.

Furthermore, by recording the secret information in tamper resistant hardware such as an IC card, the leakage of the secret information can also be prevented.

In a method of determining whether the user is authorized to access a file or not, an arbitrary application program can access the file. Thus, depending on the application, alteration, deletion, or leakage of the file might occur. Further, an important file might be deleted, altered, or leaked due to an intention or carelessness of the user or an unauthorized program such as a computer virus.

On the other hand, encryption of a secret file can prevent leakage of the file. However, deletion or alteration of the file might occur due to the intention or carelessness of the user.

Further, when a secret file is managed by the IC card, its storage space is far smaller than the storage space of the computer, so that the amount of data that can be stored is limited. Though fabrication of the tamper resistant hardware provided with a larger storage space is also possible, it costs much.

### SUMMARY OF THE INVENTION

The present invention therefore provides a data protection system that can prevent alteration, deletion, and leakage of a file in an information processing system due to an intention or carelessness of a user and an unauthorized program such as a computer virus.

A data protection system according to the present invention includes a storage unit for storing information necessary for various processing; a data processing unit for performing various processing using the information in the storage unit; a processing request unit for making requests to perform the various processing to the data processing unit; an access control unit for performing access control over the data processing unit upon reception of the requests from the processing request unit; and an exclusive control unit for protecting the storage unit from the processing request unit; and wherein the processing request unit includes means for acquiring information identifying a subject for requesting processing and information identifying the content of processing; and the access control unit includes means for determining whether the data processing unit is implemented or not based on the information identifying the subject, the information identifying the content of the processing, and an access control list in the storage unit.

A multi-OS control technique is disclosed in JP-A-11-149385, for example. A method of realizing a function of controlling access to a file on a host OS using the multi-OS control technique is also disclosed in JP-A-2001-337864. In the above technique, a file I/O hook program on the host OS hooks an access to a file on the host OS. An access control program on the guest OS determines permission of the access to the file.

In the present invention, files to be protected and programs that directly use these are managed by the guest OS. A program on the host OS makes a processing request to a program on the guest OS, and a communication control program (access control unit) on the guest OS determines whether to actually execute processing. With this, prevention of leakage of a private-key in signature generation and prevention of malicious deletion and alteration of audit trail are possible.

Furthermore, in the present invention, files to be protected are managed on the guest OS, and a function of controlling access to the file is realized on the guest OS.

According to the present invention, access to a file on the guest OS can be limited to some programs on the guest OS, so that alteration, deletion, and leakage of the file and programs on the guest OS using an unauthorized program become extremely difficult.

As described above, according to the present invention, deletion, alteration, and leakage of data due to carelessness of the user and using other programs (including a computer virus) can be prevented. Further, a technique of preventing alteration of a program that uses the data can be provided.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 illustrates a diagram schematically showing a configuration of a data protection system showing a first embodiment of the present invention;
Fig. 2 illustrates a flowchart outlining signature generation processing showing the first embodiment of the present invention;
Fig. 3 illustrates a flowchart showing authentication processing in Fig. 2;
Fig. 4 illustrates a table showing a configuration of an access control list in Fig. 1;
Fig. 5 illustrates a table showing a configuration of a session management table according to the present invention;
Fig. 6 illustrates a flowchart showing the signature generation processing showing the first embodiment of the present invention;
Fig. 7 illustrates a flowchart for session authentication processing in Fig. 6;
Fig. 8 illustrates a flowchart outlining user registration processing according to the present invention;
Fig. 9 illustrates a flowchart showing the user registration processing showing the first embodiment of the present invention;
Fig. 10 illustrates a flowchart outlining audit trail referencing according to the present invention;
Fig. 11 illustrates a flowchart showing processing of the audit trail referencing showing the first embodiment of the present invention;
Fig. 12 illustrates a diagram schematically showing a configuration of a data protection system showing a second embodiment of the present invention;
Fig. 13 illustrates a flowchart outlining writing of a document, showing the second embodiment of the present invention;
Fig. 14 illustrates a flowchart for document write processing in Fig. 13;
Fig. 15 illustrates a flowchart outlining reading of a document, showing the second embodiment of the present invention; and
Fig. 16 illustrates a flowchart for document read processing in Fig. 15.

### DETAILED DESCRIPTION OF THE EMBODIMENTS

Embodiments of the present invention will be described in detail with reference to drawings.

### (First Embodiment)

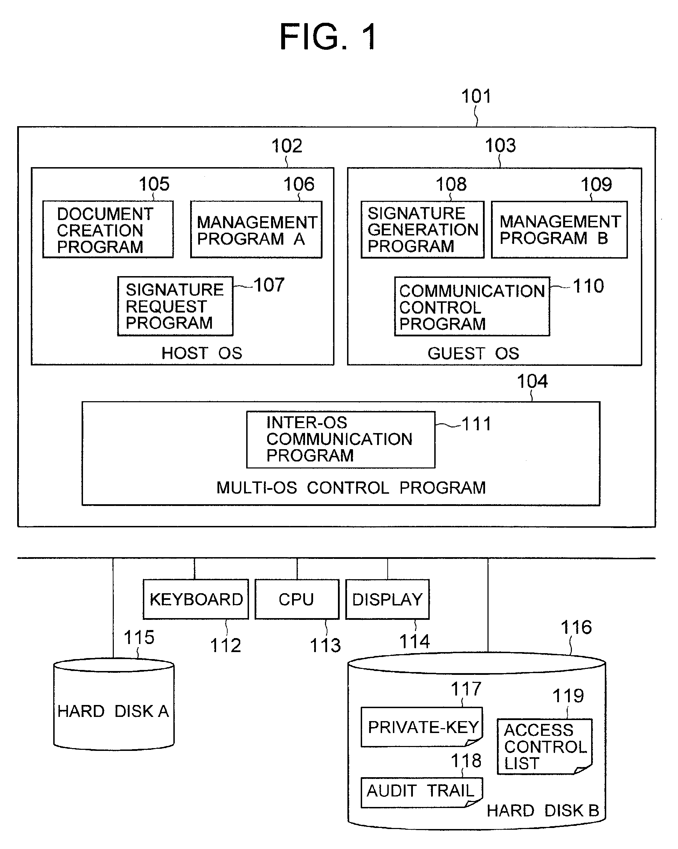

Fig. 1 is a diagram showing a configuration of an information processing system (data protection system) according to a first embodiment of the present invention.

In the first embodiment, a signature generation system that uses a multi-OS control program will be described. Within a computer, a CPU 113 for executing respective OSs and respective programs of the computer and a main memory 101 for temporarily storing various programs and data are provided. The main memory 101 includes a memory area A 102 managed by a host OS, a memory area B 103 managed by a guest OS, and a memory area C 104 managed by the multi-OS control program.

Further, within the computer, an input device such as a keyboard 112, an output device such as a display 114, and storage devices such as a hard disk A 115 under the management of the host OS and a hard disk B 116 under the management of the guest OS are interconnected. As the storage devices, in addition to the hard disks, writable nonvolatile memories such as flash memories and EEPROMs may also be employed. Further, it is preferable for the storage devices to have tamper-resistance seen in hardware.

The host OS, a document creation program 105 run under the management of the host OS, a signature request program 107 for performing mediation with programs on the guest OS, and a management program A 106 for providing interface for a user for performing addition and deletion of the user and referring to a audit trail 118 are loaded into the memory area A 102. The document creation program 105 may be, of course, a general program in the case of the first embodiment. The signature request program 107 may also be included in the document creation program 105 as an additional function.

The guest OS, a communication control program 110 run under the management of the guest OS, for performing control over communication with the host OS, a signature generation program 108 for generating a signature, and a management program B 109 for performing addition and deletion of the user and referring to the audit trail 118 are loaded into the memory area B 103. The hard disk B 116 under the management of the guest OS includes a private-key 117 used for signature generation, an access control list 119 used by the communication control program 110, and the audit trail 118.

An inter-OS communication program 111 for mediating communication between the host OS and the guest OS is loaded into the memory area C 104.

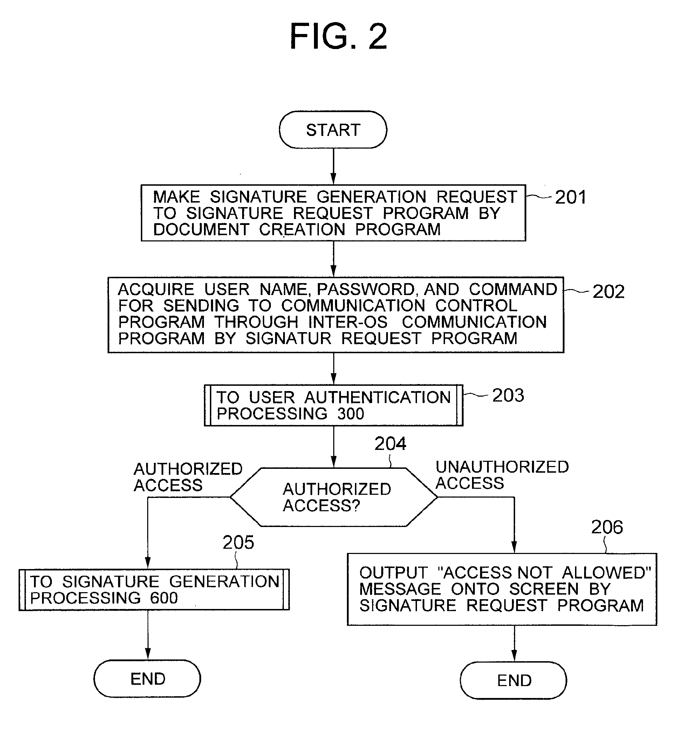

Fig. 2 is a flowchart for processing up to signature generation in this embodiment.

At step 201, the document creation program 105 makes a request for signature generation to the signature request program 107. At step 202, the signature request program 107 acquires a user name, a password, and a command, and send this data to the communication control program 110 through the inter-OS communication program 111. The command is information for identifying the content of processing. At step 203, user authentication processing 300 is performed.

In the case of an authorized access in step 204, signature generation processing 600 (at step 205) is performed. In the case of an unauthorized access, the operation proceeds to step 206. At step 206, the signature request program 107 outputs an "Access Not Allowed" message onto a screen. Details of the user authentication processing 300 and the signature generation processing 600 will be described later.

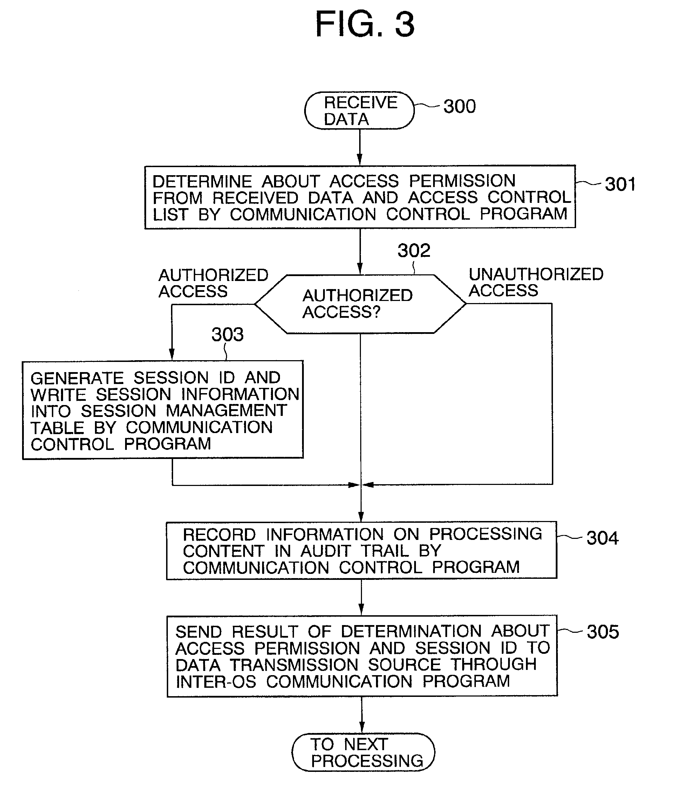

Fig. 3 is a flowchart for the user authentication processing 300 in Fig. 2.

At step 301, the communication control program 110 determines about access permission, using the received data and the access control list 119. The access control list 119 on the hard disk B 116 can be accessed through the communication control program 110 alone. Thus, if the content of the access control list 119 has been compared with the received data and matching with the user name and the password registered in the list 119 has been found, the access is determined to be the authorized access. If the matching has not been found, the access is determined to be the unauthorized access. In the case of the authorized access at step 302, the operation proceeds to step 303. In the case of the unauthorized access, the operation proceeds to step 304.

At step 303, the communication control program 110 generates a session ID and writes session information in a session management table 501. If it has been found that the access is the authorized one, the communication control program 110 generates the session ID and writes the session information in the session management table. The session management table is located in the memory area C 104 managed by the multi-OS control program, in Fig. 1. Next, at step 304, information recorded in the session management table, associated with session ID generation caused by the authorized access, and information on the unauthorized access are recorded in the audit trail 118 on the hard disk B 116. At step 305, the session ID and the result of determination about access permission are transmitted to a requesting source.

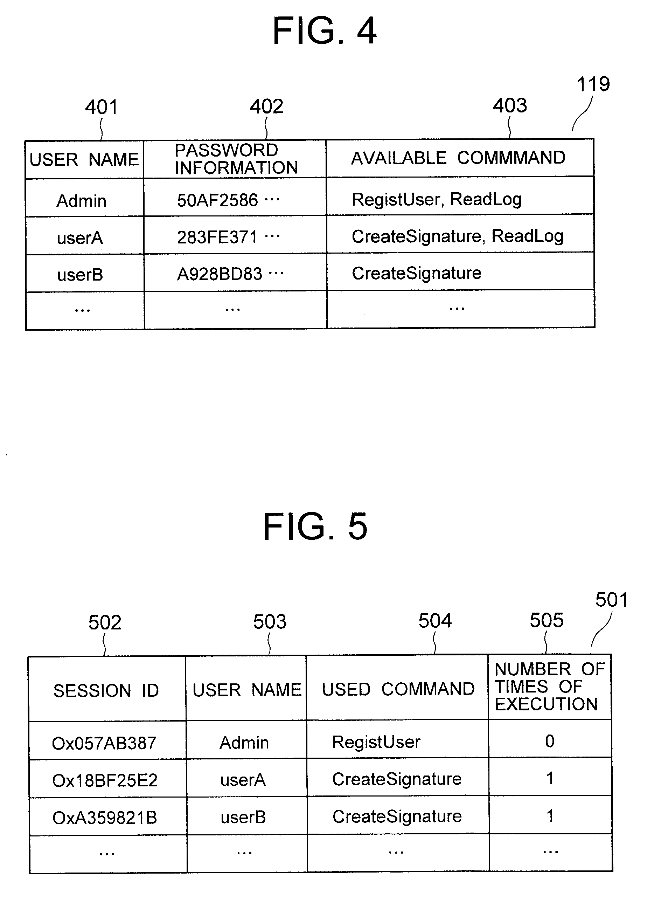

Fig. 4 is a table showing a configuration of the access control list 119 in the first embodiment of the present invention.

The first column shows a user name 401. The second column shows password information 402, and the third column shows an available command 403. The password information 402 in the second column may be the information such as the hash value of a received password or encrypted data on the password, from which it can be determined whether the password is valid or not. In this embodiment, the hash values of passwords are used. The available command 403 in the third column shows the content of an operation (command) that can be used by the user.

Fig. 5 is a table showing a configuration of the session management table 501 according to the present invention.

The first column shows a session ID 502, the second column shows a user name 503, the third column shows a used command 504, and the fourth column shows the number of times of execution 505. The number of times of execution 505 shows the number of times of accesses for the session ID 502, and the number of times the communication control program 110 executes processing for the session ID 502. At step 303, the communication control program 110 initializes the number of times of execution 505 to "0". "1" indicates that first processing has been executed. By utilizing the number of times of execution 505, sequence control is realized. The sequence control herein refers to execution of various processing according to a correct processing procedure.

More specifically, the communication control program 110 has information on a correct processing procedure (from processing A, processing B, processing C, and so on) for each of the used commands 504. The processing A is executed when the number of times of execution 505 becomes 1, the processing B is executed when the number of times of execution 505 becomes 2, and the processing C is executed when the number of times of execution 505 becomes 3. The communication control program regards the processing with other values of the number of times of execution do not follow the correct processing procedure. Then, the communication control program invalidates their session IDs 502. The sequence control is performed in a manner as described above. In this embodiment, the sequence control is performed based on the number of times of execution 505 and information on the correct processing procedure. Any method of realizing the sequence control may be employed. According to this embodiment, wrongdoings such as disabling of a sequence control function due to carelessness of the user and an unauthorized program such as the computer virus can be prevented.

At step 304 in Fig. 3, the communication control program 110 records information on the content of the processing in the audit trail 118. The session ID, the user name, the content of processing (command), success/failure information on the processing, the date and time of audit trail recording are written into the audit trail 118. A signature may be attached to the information in the audit trail 118. With this, malicious audit trail alteration can be prevented.

At step 305 in Fig. 3, the result of determination about access permission and the session ID are sent to the source of data transmission through the inter-OS communication program 111. Incidentally, the "source of data transmission" for signature generation becomes the signature request program 107.

In this embodiment, a subject for requesting access to a program on the guest OS is the user, and determination about access permission is performed for each user. The subject may also be a program on the host OS. In this case, determination about access permission is made for each program on the host OS.

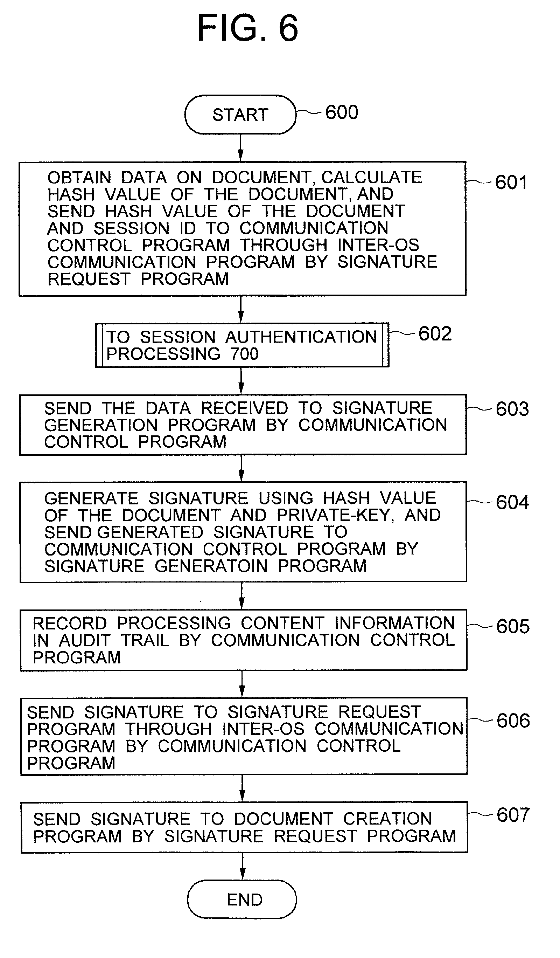

Fig. 6 is a flowchart showing the signature generation processing 600 in Fig. 2.

At step 601, the signature request program 107 acquires data on a document, calculates the hash value of the document, and sends the session ID obtained by using the hash value of the document and the user authentication processing 300 to the communication control program 110 through the inter-OS communication program 111. At step 602, session authentication processing 700 is performed. Details of the session authentication processing 700 will be described later. At step 603, the communication control program 110 sends the received data to the signature generation program 108.

At step 604, the signature generation program 108 generates a signature using the hash value of the document and the private-key 117, and sends the generated signature to the communication control program 110. At step 605, the communication control program 110 records information on the content of the processing in the audit trail 118. At step 606, the communication control program 110 sends the signature to the signature request program 107 through the inter-OS communication program 111. At Step 607, the signature request program 107 sends the signature to the document creation program 105.

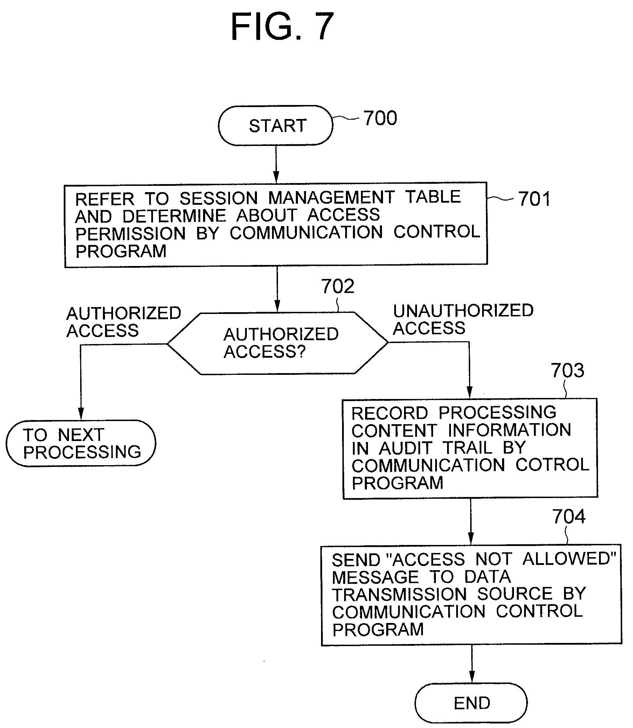

Fig. 7 is a flowchart showing the session authentication processing 700 in Fig. 6.

At step 701, the communication control program 110 refers to the session management table 501 in the memory area C 104 and makes determination about access permission. Specifically, it is checked whether session ID matching has been found and an authority to execute requested processing is present. In the case of the authorized access at step 702, the operation proceeds to the next processing. In the case of the unauthorized access, the operation proceeds to step 703. At step 703, the communication control program 110 records information on the content of the processing (the access being unauthorized) in the audit trail 118. At step 704, the communication control program 110 sends the message indicating that "Access Not Allowed" to the data transmission source.

Next, a method of registering the user will be described.

In order to perform signature generation using the system in this embodiment, it is necessary to perform user registration in advance. The user registration is performed by a security administrator. The security administrator is authorized to perform user management for using the signature generation system in this embodiment. He/She is different from a system administrator for performing various settings for the host OS. When the security manager is authorized to serve as the system administrator in view of a security policy of the overall system, the same person may serve as both of the security administrator and the system administrator.

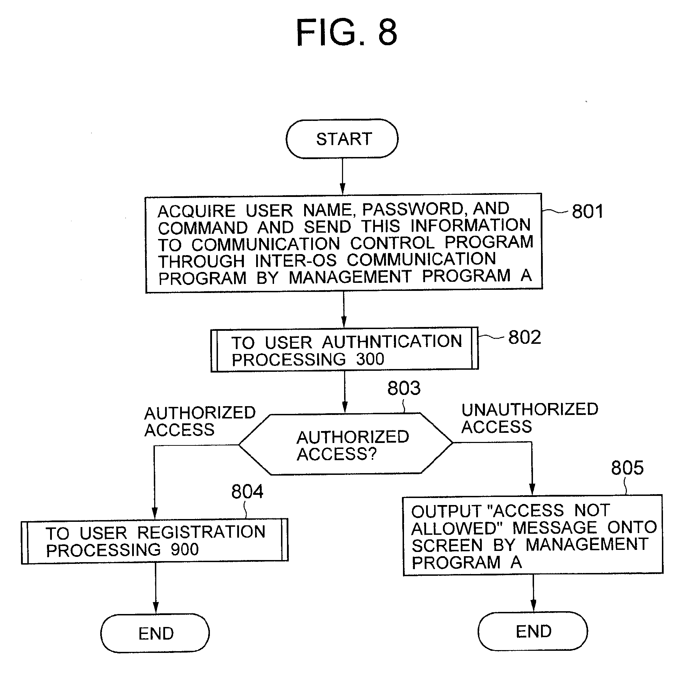

Fig. 8 is a flowchart outlining processing up to the user registration according to the present invention.

At step 801, the management program A 106 acquires the user name, the password, and command, and sends the information to the communication control program 110 through the inter-OS communication program 111. At step 802, the user authentication processing 300 is performed. The user authentication processing is the same as the processing described about the before-mentioned flowchart in Fig. 3. In the case of the authorized access at step 803, user registration processing 900 (at step 804) is performed. In the case of the unauthorized access, the operation proceeds to step 805. Details of the user registration processing 900 will be described later. At step 805, the management program A 106 outputs the "Access Not Allowed" message onto the screen.

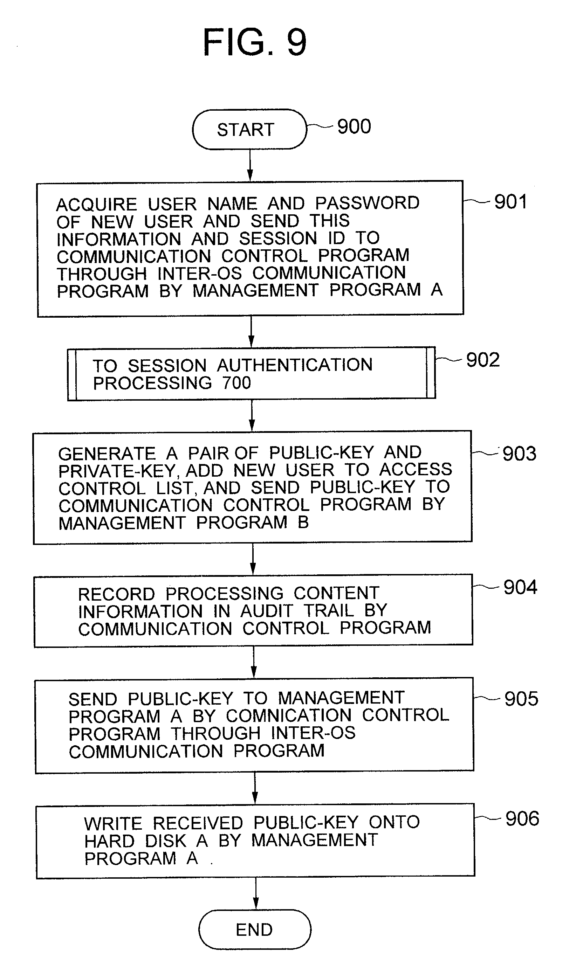

Fig. 9 is a flowchart showing the user registration processing 900 in Fig. 8.

At step 901, the management program A 106 acquires the name and password of a new user, and sends the information and a session ID to the communication control program 110 through the inter-OS communication program 111. At step 902, the session authentication processing 700 is performed. The session authentication processing that is the same as the processing in the flowchart in Fig. 7 is performed.

At step 903, the management program B 109 generates a pair of a public-key and the private-key 117, adds the new user to the access control list 119, and sends the public-key to the communication control program 110. At step 904, the communication control program 110 records information on the content of the processing in the audit trail 118.

At step 905, the communication control program 110 sends the public-key to the management program A 106 through the inter-OS communication program 111. At step 906, the management program A 106 writes the received public-key on the hard disk A 115. Incidentally, the public-key may also be written onto the hard disk B 116 managed by the guest OS.

Next, verification of the generated signature will be described. Verification of the signature is performed using the public-key on the hard disk A 115 managed by the host OS. Alternatively, the public-key may be written onto the hard disk B 116 managed by the guest OS, and verification of the signature may be performed on the guest OS. By performing verification of the signature on the guest OS, alteration of a program for verifying the signature can be prevented.

Next, a method of referring to the audit trail 118 will be described.

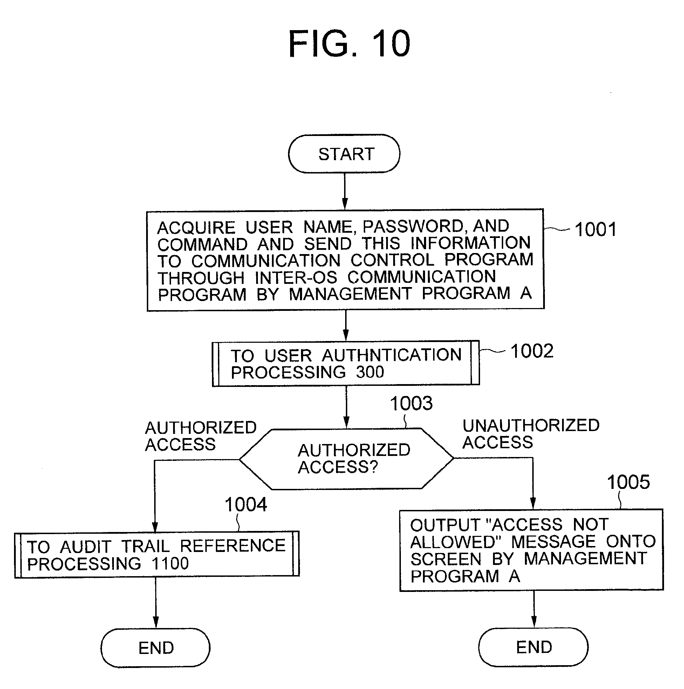

Fig. 10 is a flowchart showing processing up to referring to the audit trail 118 according to the present invention.

At step 1001, the management program A 106 acquires the user name, password, and command, and sends the information to the communication control program 110 through the inter-OS communication program 111. At step 1002, the user authentication processing 300 is performed. In the case of the authorized access at step 1003, the processing of referring to the audit trail 118 (at step 1004) is performed. In the case of the unauthorized access, the operation proceeds to step 1005.

At step 1005, the management program A 106 outputs the "Access Not Allowed" message onto the screen. Incidentally, when a limitation is not particularly imposed on users who can refer to the audit trail 118 as the security policy of the overall system, the user authentication processing 300 does not need to be performed.

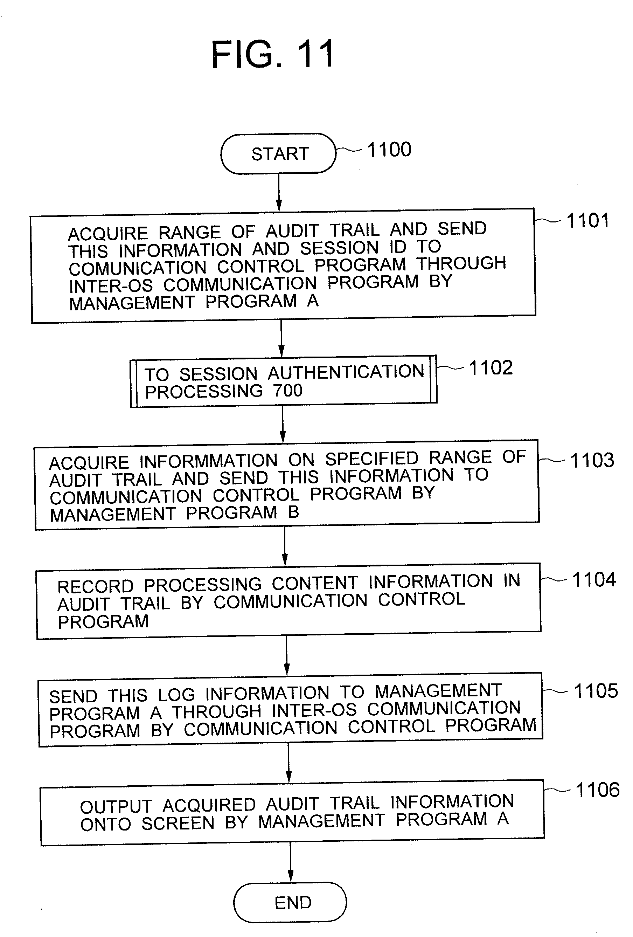

Fig. 11 is a flowchart for the processing of referring to the audit trail 118 in Fig. 10.

At step 1101, the management program A 106 acquires the range of the audit trail 118, and sends the information and the session ID to the communication control program 110 through the inter-OS communication program 111. At step 1102, the session authentication processing 700 is performed. At step 1103, the management program B 109 acquires information on the specified range of the audit trail 118, and sends the information to the communication control program 110. At step 1104, the communication control program 110 records information on the content of the processing in the audit trail 118. At step 1105, the communication control program 110 sends the information on the audit trail 118 to the management program A 106 through the inter-OS communication program 111. At step 1106, the management program A 106 outputs the acquired information on the audit trail 118 onto the screen.

According to this embodiment, alteration, deletion, and leakage of the signature generation program 108, management program B 109, communication control program 110 in the memory area B managed by the guest OS, and the private-key 117, audit trail 118, and access control list 119 on the hard disk B 116 under the management of the guest OS due to carelessness of a user and an unauthorized program such as the computer virus can be prevented. By using this embodiment, utilization of various resources managed by the guest OS can be limited to only specific programs. Even if typical computer viruses can do a harm to various resources on the host OS, it becomes difficult to do a harm to various resources on the guest OS. Thus, various resources on the guest OS can be protected.

### (Second Embodiment)

Next, a second embodiment of the present invention will be described.

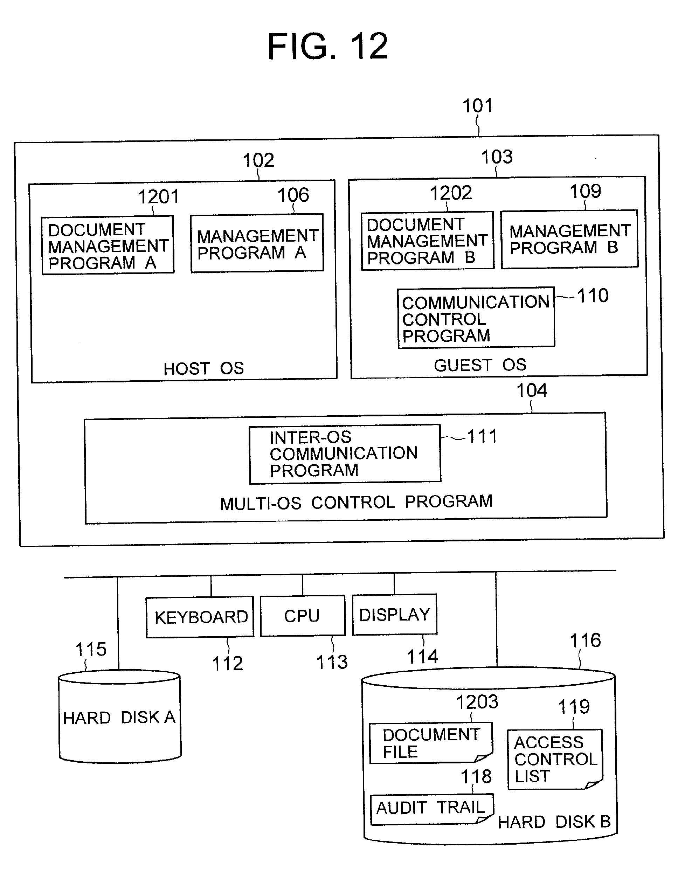

Fig. 12 is a diagram showing a configuration of an information processing system (data protection system) according to the second embodiment of the present invention.

In this embodiment, management of a typical document file on the guest OS will be described.
Within the computer, the CPU 113 for executing respective OSs and respective programs of the computer and the main memory 101 for temporarily recording various programs and data are provided. The main memory 101 includes the memory area A 102 managed by the host OS, memory area B 103 managed by the guest OS, and memory area C 104 managed by the multi-OS control program. Further, within the computer, an input device such as the keyboard 112, an output device such as the display 114, and storage devices such as the hard disk A 115 under the management of the host OS and the hard disk B 116 under the management of the guest OS are interconnected.

The host OS, a document management program A 1201 for providing interface for the user for performing data transfer to the guest OS, and the management program A 106 for providing interface for the user for performing user addition and deletion and referring to the audit trail 118 are loaded into the memory area A 102.

The guest OS, the communication control program 110 for performing control over communication with the host OS, a document management program B 1202, and the management program B 109 for performing user addition and deletion and referring to the audit trail 118, all of which are run under the management of the guest OS.

The hard disk B 116 under the management of the guest OS includes a document file 1203 transmitted to the guest OS by the host OS, and the access control list 119 and the audit trail 118 used by the communication control program 110. The document file 1203 is prepared by an application program on the host OS and is written onto the hard disk B 116 using the document management program A 1201.

The inter-OS communication program 111 for mediating communication between the host OS and the guest OS is loaded into the memory area C.

Next, a method of writing the document file 1203 on the host OS onto the hard disk B 116 under the management of the guest OS will be described.

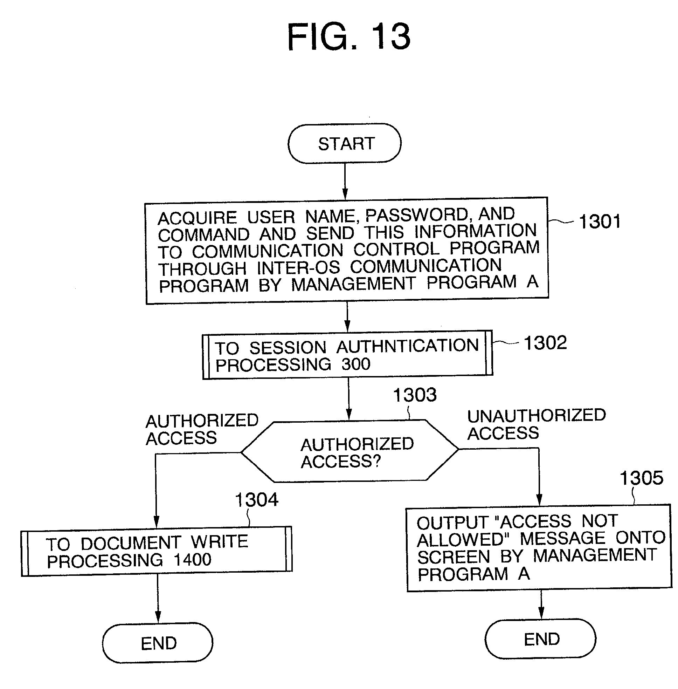

Fig. 13 is a flowchart outlining processing up to writing the document file 1203 onto the hard disk B 116.

At step 1301, the document management program A 1201 acquires the user name, password, and command, and sends this information to the communication control program 110 through the inter-OS communication program 111. At step 1302, the user authentication processing 300 is performed. In the case of the authorized access in step 1303, document writing processing 1400 (at step 1304) is performed. In the case of the unauthorized access, the operation proceeds to step 1305. At step 1305, the document management program A 1201 outputs the "Access Not Allowed" message onto the screen.

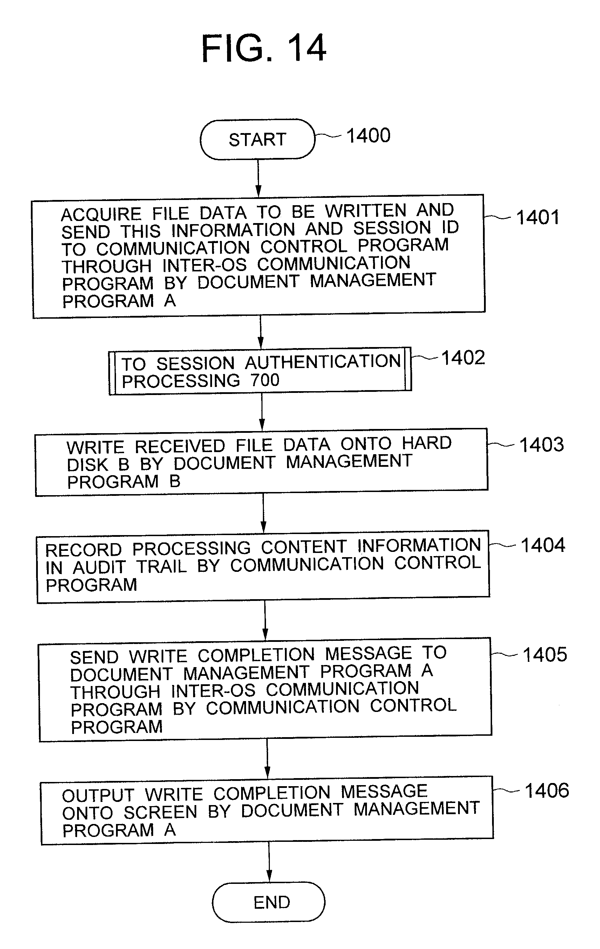

Fig. 14 is a flowchart showing the document writing processing 1400 in Fig. 13.

At step 1401, the document management program A 1201 acquires data on the document file 1203 to be written, and sends the information and the session ID to the communication control program 110 through the inter-OS communication program 111. At step 1402, the session authentication processing 700 is performed. At step 1403, the document management program B 1202 writes received data on the file onto the hard disk B 116. At step 1404, the communication control program 110 records information on the content of the processing in the audit trail 118. At step 1405, the communication control program 110 sends a message indicating completion of writing to the document management program A 1201 through the inter-OS communication program 111. At step 1405, the document management program A 1201 outputs the message indicating completion of writing onto the screen.

Preferably, writing of the document is performed only in the form of appending. Further, in conjunction with the signature generation processing 600 in the first embodiment, before the document file 1203 is written onto the hard disk B 116, a signature may be attached to the document file. The file for which writing is performed is not limited to the document file, and may be any file such as an image file or a music file.

Next, a method of reading the document file 1203 on the hard disk B 116 under the management of the guest OS by the host OS will be described.

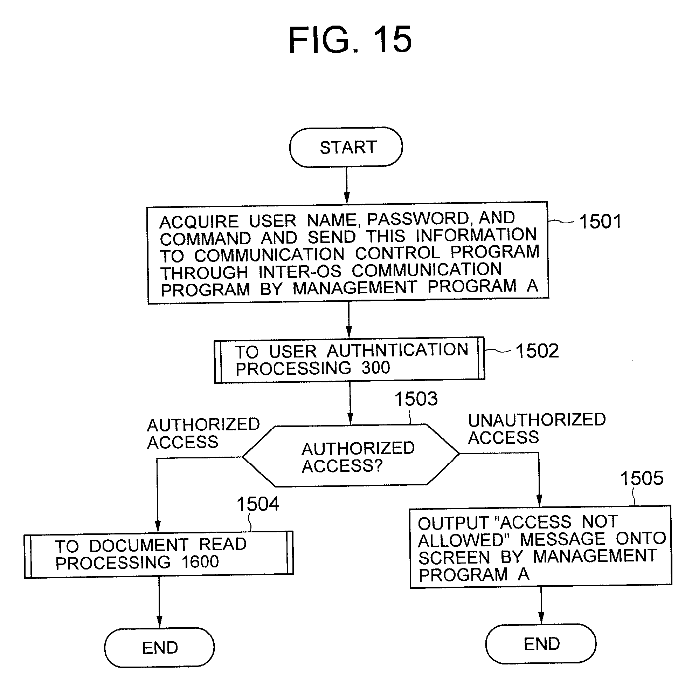

Fig. 15 is a flowchart outlining processing up to the processing of reading the document file 1203 from the hard disk B 116 according to the present invention.

At step 1501, the document management program A 1201 acquires the user name, password, and command, and send this information to the communication control program 110 through the inter-OS communication program 111. At step 1502, the user authentication processing 300 is performed. In the case of the authorized access at step 1503, document reading processing 1600 (at step 1504) is performed. In the case of the unauthorized access, the operation proceeds to step 1505. At step 1505, the document management program A 1201 outputs the "Access Not Allowed" message onto the screen. When a limitation is not particularly imposed on users who can read a file on the guest OS as the security policy of the overall system, the user authentication processing 300 does not need to be performed.

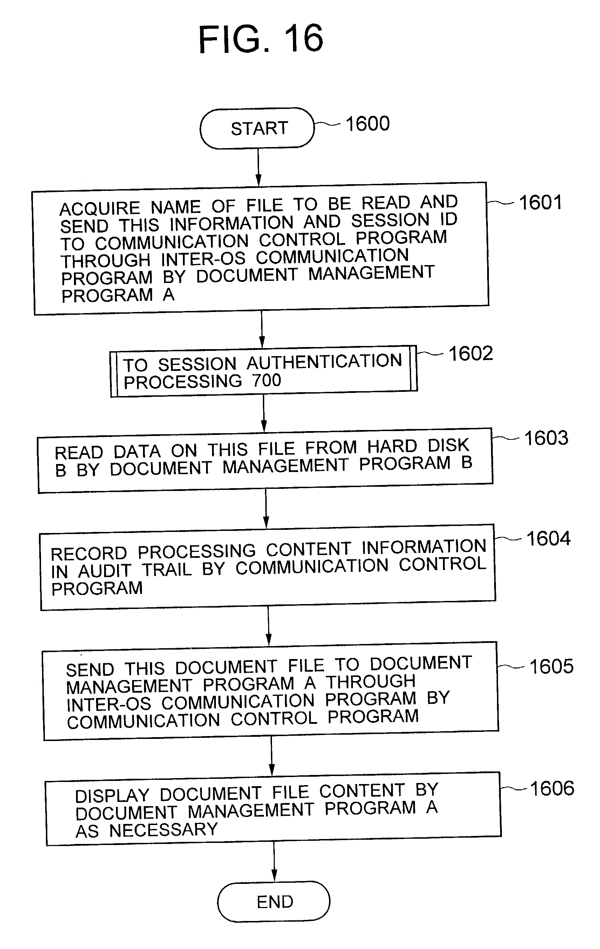

Fig. 16 is a flowchart showing the document reading processing 1600 in Fig. 15.

At step 1601, the document management program A 1201 acquires the name of the file for which reading is performed, and sends this information and the session ID to the communication control program 110 through the inter-OS communication program 111. At step 1602, the session authentication processing 700 is performed. Incidentally, the session authentication processing 700 may be limited to reading only important documents. At step 1603, the document management program B 1202 reads data on the document file 1203 from the hard disk B 116. At step 1604, the communication control program 110 records information on the content of the processing in the audit trail 118. The content of processing is information such as the name of the file, the name of the user who made request for reading, and the time at which the access has been made, except for the content read. At step 1605, the communication control program 110 sends the document file 1203 to the document management program A 1201 through the inter-OS communication program 111.

At step 1606, the document management program A 1201 displays the content of the file as necessary.

According to this embodiment, the risks of alteration, deletion, and leakage of data on various important files due to carelessness of the user or a computer virus can be reduced in an environment where general-purpose OSs are run.

According to this embodiment, alteration, deletion, and leakage of the document management program B 1202, management program B 109, and communication control program 110 in the memory area B managed by the guest OS and the document file 1203, audit trail 118, and access control list 119 on the hard disk B 116 under the management of the guest OS due to carelessness of the user and an authorized program such as the computer virus can be prevented.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A data protection system comprising:
a storage unit (116) for storing information necessary for various processing;
a data processing (108) unit for performing various processing using the information in the storage unit (116) ;
a processing request unit (107) for making requests to perform the various processing to the data processing unit (108);
an access control unit (110) for performing access control over the data processing unit (108) upon reception of the requests from the processing request unit (107); and
an exclusive control unit (104) for protecting the storage unit (116), the data processing unit (108), and the access control unit (110) from the processing request unit (107);
wherein said processing request unit (107) includes means for acquiring information identifying a subject for requesting processing and information identifying a content of processing; and
said access control unit (110) includes means for determining whether the data processing unit (108) is executed or not based on the information identifying the subject, the information identifying the content of the processing, and an access control list (119) in the storage unit (116).

2. The data protection system as set forth in claim 1, wherein said data processing unit (108) comprises means for generating a digital signature using key information (117) in the storage unit (116).

3. The data protection system as set forth in claim 1, wherein said data processing unit (109) includes means for setting and managing the access control list (119) in the storage unit (116).

4. The data protection system as set forth in claim 1, wherein
said data processing unit (108) has a plurality of processing functions;
a sequence control list (504) (505) for defining a correct order of the processing is provided in the storage unit (116); and
said access control unit (110) includes means for determining whether the various functions of the data processing unit (108) are executed or not based on the sequence control list (504) (505).

5. The data protection system as set forth in claim 1, comprising:
a first data processing unit (108) including means for generating a digital signature using key information (117) in the storage unit (116); and
a second data processing (109) unit including means for setting and managing the access control list (119) in the storage unit (116).

6. The data protection system as set forth in claim 1, wherein said access control unit (110) includes means for recording in the storage unit (116) results of determination about accesses responsive to the requests from the processing request unit (107).

7. The data protection system as set forth in claim 6, wherein said access control unit (110) includes means for referring to the results of determination about the accesses.

8. A computer data protection system comprising:
a storage unit (116) which stores various information;
a write and read processing unit (1202) which records data in the storage unit (116) or extracting data from the storage unit (116);
a write and read request unit (1201) which makes a request to the write and read processing unit (1202) to perform data writing or reading;
an access control unit (110) which performs access control over the write and read processing unit (1202) upon reception of the request from the write and read request unit (1201); and
an exclusive control unit (104) which protects the storage unit (116), the write and read processing unit (1201), and the access control unit (110) from the write and read request unit (1201);
wherein said write and read request unit (1201) includes means for acquiring information for identifying a subject making the request for writing or reading and information to be written into or read from the storage unit (116); and
said access control unit (110) includes means for determining whether the write and read processing unit (1202) is executed or not based on the information identifying the subject and the access control list (119) in the storage unit (116).

9. The data protection system as set forth in claim 8, comprising:
an access managing unit (109) for setting and managing the access control list (119) in the storage unit (116).

10. The computer system as set forth in claim 8,
wherein said access control unit (110) includes means for recording in the storage unit (116) a result of determination about an access responsive to the request from the write request unit (1201) and means for referring to the result of determination about the access.
